(19) Europäisches Patentamt
European Patent Office
Office européen des brevets

(11) EP 1 112 982 A1

(12) EUROPEAN PATENT APPLICATION

(43) Date of publication:
04.07.2001 Bulletin 2001/27

(51) Int Cl.⁷: **C04B 24/22**, C04B 24/26, C08F 26/02

(21) Application number: 00127803.5

(22) Date of filing: 22.12.2000

(84) Designated Contracting States:
**AT BE CH CY DE DK ES FI FR GB GR IE IT LI LU MC NL PT SE TR**
Designated Extension States:
**AL LT LV MK RO SI**

(30) Priority: 27.12.1999 JP 36887199

(71) Applicant: **Showa Denko Kabushiki Kaisha**
**Tokyo 105-8518 (JP)**

(72) Inventors:
- **Futami, Takanori, c/o Montell SDK Sunrise Ltd.**
  **2-chome, Bunkyou-ku, Tokyo 112-0004 (JP)**
- **Hayashi, Masahiro,**
  **c/o Kawasaki Res. Laboratory**
  **Kawasaki-shi, Kanagawa 210-0858 (JP)**

(74) Representative: **Strehl Schübel-Hopf & Partner**
**Maximilianstrasse 54**
**80538 München (DE)**

## (54) Cement admixture and cement composition

(57) A cement admixture comprising (A) a compound selected from a melaminesulfonic acid formaldehyde condensate, a naphthalenesulfonic acid formaldehyde condensate and salts thereof and (B) a copolymer obtained by copolymerizing a monomer mixture comprising (a) from 30 to 90 mass% of one or more N-vinylcarboxylic acid amide-type monomer represented by the formula (1) below, (b) from 10 to 70 mass% of one or more anionic unsaturated monomer selected from an unsaturated carboxylic acid-type monomer represented by the formula (2) below and an unsaturated sulfonic acid-type monomer represented by the formula (3) below, and optionally (c) from 0 to 40 mass% of one or more nonionic unsaturated monomer, provided that the total of (a), (b) and (c) is 100 mass%, wherein the symbols in the formulae are as described in the specification.

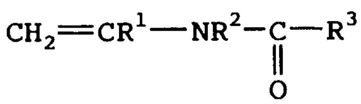

... (1)

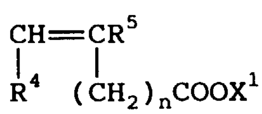

... (2)

$$CH_2{=}CR^6{-}X^4{-}R^7{-}SO^3{-}X^5 \qquad (3)$$

and a cement composition comprising said cement admixture are provided.

The cement admixture of the present invention can impart excellent capabilities to a fresh cement composition such as fluidity, fluidity retentive property, filling property and material separation resistance, therefore, can improve the quality of hardened form.

EP 1 112 982 A1

## Description

TECHNICAL FIELD

The present invention relates to a cement admixture and a cement composition. More specifically, the present invention relates to a cement admixture which can, when added to a cement composition such as concrete, mortar and cement paste, impart the cement composition with the fluidity, fluidity retentive property, filling property, material separation resistance and the like and to a cement composition which has blended therein the above cement admixture, which is easy to apply and work, and which allows improvement of the quality of the hardened form.

BACKGROUND ART

Representative examples of conventionally known cement admixtures mainly for improving the fluidity of a cement composition include various compounds such as salts of naphthalenesulfonic acid formaldehyde condensate, salts of melaminesulfonic acid formaldehyde condensate and polycarboxylates. This kind of cement admixture is generally added to a cement composition at the kneading to improve the fluidity of the cement composition and thereby attain good workability. Furthermore, the cement admixture can be used with a reduced amount of water, so that the hardened form of the cement composition can be effectively improved in the strength and durability.
These conventional cement admixtures each individually has specific features and defects. For example, salts of naphthalenesulfonic acid formaldehyde condensate and salts of melaminesulfonic acid formaldehyde condensate have excellent hardening property and provide a hardened form favored with good texture appearance. However, these are defective in that the fluidity extremely decreases with the passing of time; in other words, so-called fluidity retentive property is poor.
Polycarboxylates have high capability in the water reducing and fluidity retentive properties but disadvantageously have large hardening retardation. Moreover, these admixtures all have a problem that aggregate separation or material separation such as bleeding may occur due to the change in the amount of water, aggregate quality, temperature, added amount or the like. As a result, the applicability of the concrete decreases to incur reduction in the quality of the hardened concrete (see, for example, JP-A-5-238795 (the term "JP-A" as used herein means an "unexamined published Japanese patent application"), JP-A-8-225354 and JP-A-6-206050).
As such, by those conventional cement admixtures, the capabilities such as fluidity, fluidity retentive property, material separation resistance and hardening property cannot be imparted to a cement composition in good balance.

DISCLOSURE OF INVENTION

An object of the present invention is to solve the problem of a decrease in the fluidity of a cement composition due to aging, namely, poorness in the so-called fluidity retentive property, of cement admixtures such as melaminesulfonic acid formaldehyde condensate and naphthalenesulfonic acid formaldehyde condensate and to provide a cement admixture capable of imparting in good balance the capabilities such as fluidity, fluidity retentive property, material separation resistance and hardening property to the cement composition.
Another object of the present invention is to provide a cement composition using the above admixture and a method for preparing a cement composition using the admixture.
As a result of extensive investigations to solve the above-described problems, the present inventors have found that when a mixture of a melaminesulfonic acid formaldehyde condensate or a naphthalenesulfonic acid formaldehyde condensate and copolymer obtained by copolymerizing a monomer mixture comprising a monomer selected from an N-vinylcarboxylic acid amide-type monomer, an unsaturated carboxylic acid-type monomer and an unsaturated sulfonic acid-type monomer and optionally a nonionic unsaturated monomer is added to a fresh cement composition, the fluidity retentive property can be remarkably improved more than expected. The present invention has been accomplished based on this finding.
More specifically, the present invention relates to the following matters, i.e., cement admixture, cement composition, and method for producing the same, hardened form using the composition, and construction using the hardened form.

1. A cement admixture comprising (A) one or more compound selected from a condensate of formaldehyde with one or more compound of melaminesulfonic acid, naphthalenesulfonic acid, benzenesulfonic acid, toluenesulfonic acid, methylnaphthalenesulfonic acid and salts thereof and ($B_1$) a copolymer obtained by copolymerizing a monomer mixture comprising

    (a) from 30 to 90% (mass%; hereinafter, all % means mass% unless otherwise indicated specifically) of one

or more N-vinylcarboxylic acid amide-type monomer represented by the following formula (1)

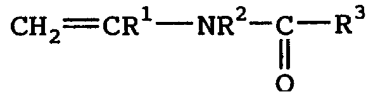
... (1)

wherein $R^1$, $R^2$ and $R^3$ each independently represent hydrogen atom or a methyl group and
(b) from 10 to 70 mass% of one or more anionic unsaturated monomer selected from an unsaturated carboxylic acid-type monomer represented by the following formula (2)

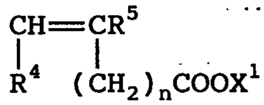
... (2)

wherein $R^4$ represents hydrogen atom, a methyl group or $-COOX^2$, $R^5$ represents hydrogen atom, a methyl group or $-COOX^3$, $X^1$, $X^2$ and $X^3$ each independently represent hydrogen atom, an alkali metal, an alkaline earth metal, an ammonium group or an ammonium group substituted by an organic group, and n represents 0 or 1, provided that when n represents 0, $R^5$ does not represent $-COOX^3$ and
an unsaturated sulfonic acid-type monomer represented by the following formula (3)

$$CH_2{=}CR^6{-}X^4{-}R^7{-}SO_3{-}X^5 \quad \cdots (3)$$

wherein $R^6$ represents hydrogen atom or a methyl group, $R^7$ represents a linear alkylene group having from 1 to 4 carbon atoms or a branched alkylene group, $X^4$ represents -CONH- or -COO-, and $X^5$ represents hydrogen atom, an alkali metal, an alkaline earth metal, an ammonium group or an ammonium group substituted by an organic group,
provided that the total of (a) and (b) is 100 mass%.

2. A cement admixture comprising (A) one or more compound selected from a melaminesulfonic acid formaldehyde condensate, a naphthalenesulfonic acid formaldehyde condensate and salts thereof and ($B_2$) a copolymer obtained by copolymerizing a monomer mixture comprising

(a) from 30 to 90 mass% of one or more N-vinylcarboxylic acid amide-type monomer represented by the following formula (1)

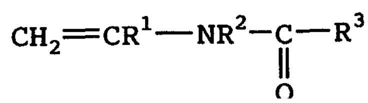
... (1)

wherein the symbols have the same meanings as in 1 above,
(b) from 10 to 70 mass% of one or more anionic unsaturated monomer selected from an unsaturated carboxylic acid-type monomer represented by the following formula (2)

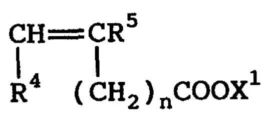
... (2)

wherein the symbols have the same meanings as in 1 above and
an unsaturated sulfonic acid-type monomer represented by the following formula (3)

$$CH_2{=}CR^6{-}X^4{-}R^7{-}SO_3{-}X^5 \quad \cdots (3)$$

wherein the symbols have the same meanings as in 1 above, and
(c) from 0 to 40 mass% of one or more nonionic unsaturated monomer,
provided that the total of (a), (b) and (c) is 100 mass%.

3. The cement admixture as described in 1 or 2 above, wherein the content ratio of the copolymer ($B_1$) or ($B_2$) in the solid content of the cement admixture is from 0.1 to 20 mass%.
4. The cement admixture as described in 1 or 2 above, wherein the N-vinylcarboxylic acid amide-type monomer (a) is N-vinylacetamide.
5. The cement admixture as described in 1 or 2 above, wherein the anionic unsaturated monomer (b) is one or more monomer selected from acrylic acid, methacrylic acid, maleic acid, 2-acrylamido-2-methylpropanesulfonic acid and salts thereof.
6. The cement admixture as described in 2, wherein the nonionic unsaturated monomer (c) is one or more monomer selected from alkyl acrylates, alkyl methacrylates, hydroxyalkyl acrylates, hydroxyalkyl methacrylates, acrylonitrile, methacrylonitrile and vinyl acetate.
7. The cement admixture as described in 2 or 6 above, wherein the ratio of the nonionic unsaturated monomer (c) in the copolymer ($B_2$) is from 5 to 30 mass%.
8. A method for preparing a cement composition, comprising adding a cement admixture described in any one of 1 to 7 above to a cement composition slurry.
9. The method for preparing a cement composition as described in 8 above, wherein the compound (A) and the copolymer ($B_1$) or ($B_2$) are separately added.
10. The method for preparing a cement composition as described in 8 or 9 above, wherein the addition amount of the cement admixture is from 0.1 to 5.0 mass% in terms of the solid content based on the cement composition.
11. A cement composition manufactured by the preparation method described in any of 8 to 10 above.
12. A cement composition having blended therein a cement admixture described in any one of 1 to 7 above.
13. A hardened product of concrete or mortar using a cement composition described in 12 above.
14. A construction using a hardened product described in 13 above.

BRIEF DESCRIPTION OF THE DRAWINGS

Fig. 1 is a perspective view of an L-type tester for the self-filling test of concrete.
Fig. 2 is a side view of an L-type tester for the self-filling test of concrete.

EMBODIMENT OF THE INVENTION

The component (A) used in the cement admixture of the present invention includes one or more compound selected from a melaminesulfonic acid formaldehyde condensate, a naphthalenesulfonic acid formaldehyde condensate, and salts thereof.
The melaminesulfonic acid formaldehyde condensate and salts thereof used in the present invention is obtained by co-condensing a melaminesulfonic acid and salts thereof with formalin. Those commercially available as a cement admixture, for example, MOLMASTER-L-10 (trade name, produced by Showa Denko K.K.) may be used. The melaminesulfonic acid may be also be appropriately co-condensed together with urea, phenol, cresol, resorcin or the like.
For the manufacture of the melaminesulfonic acid formaldehyde condensate and salts thereof, a known method may be used. For example, a method of reacting melamine with formaldehyde and a sulfonating agent under basic conditions (pH: 9 to 12) and then co-condensing the reaction product under acidic conditions (pH: 2 to 6) may be used. Examples of the sulfonating agent which can be used include sodium sulfite, sodium bisulfite and potassium bisulfite.
The naphthalenesulfonic acid formaldehyde condensate and salts thereof used in the present invention is obtained by co-condensing a naphthalenesulfonic acid and salts thereof with formalin. Those commercially available as a cement admixture, for example, MIGHTY 150 (trade name, produced by Kao Corp.) may be used. The naphthalenesulfonic acid may also be appropriately co-condensed together with benzenesulfonic acid, toluenesulfonic acid, methylnaphthalenesulfonic acid, lignin sulfonic acid, urea, phenol, cresol, resorcin or the like.
For the manufacture of the naphthalenesulfonic acid formaldehyde condensate (and/or a salt thereof), a known method may be used. For example, a method of reacting a naphthalenesulfonic acid with formaldehyde in the presence of sulfonic acid and then co-condensing the reaction product may be used.
The component (B) used in the cement admixture of the present invention comprises (i) a copolymer obtained by copolymerizing a monomer mixture comprising (a) from 30 to 90 mass% of one or more N-vinylcarboxylic acid amide-type monomer represented by the formula (1) below and (b) from 10 to 70 mass% of one or more anionic unsaturated monomer selected from an unsaturated carboxylic acid-type monomer represented by the formula (2)

below and an unsaturated sulfonic acid-type monomer represented by the formula (3) below, provided that the total of (a) and (b) is 100 mass%; or (ii) a copolymer obtained by copolymerizing a monomer mixture comprising (a) from 30 to 90 mass% of one or more N-vinylcarboxylic acid amide-type monomer represented by the formula (1) below, (b) from 10 to 70 mass% of one or more anionic unsaturated monomer selected from an unsaturated carboxylic acid-type monomer represented by the formula (2) below and an unsaturated sulfonic acid-type monomer represented by the formula (3) below, and (c) from 0 to 40 mass% of one or more nonionic unsaturated monomer, provided that the total of (a), (b) and (c) is 100 mass%.

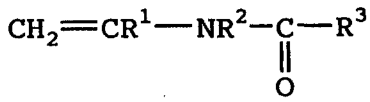 ... (1)

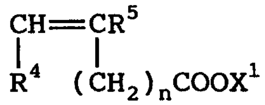 ... (2)

$$CH_2{=}CR^6-X^4-R^7-SO_3-X^5 \quad \cdots (3)$$

In the above formula (1), $R^1$ $R^2$ and $R^3$ each independently represent hydrogen atom or a methyl group.

In the above formula (2), $R^4$ represents hydrogen atom, a methyl group or -COOX$^2$, $R^5$ represents hydrogen atom, a methyl group or -COOX$^3$, $X^1$, $X^2$ and $X^3$ each independently represent hydrogen atom, an alkali metal, an alkaline earth metal, an ammonium group or an ammonium group substituted by an organic group, and n represents 0 or 1, provided that when n represents 0, $R^5$ does not represent -COOX$^3$.

In the above formula (3), $R^6$ represents hydrogen atom or a methyl group, $R^7$ represents a linear alkylene group having from 1 to 4 carbon atoms or a branched alkylene group, $X^4$ represents -CONH- or -COO-, and $X^5$ represents hydrogen atom, an alkali metal, an alkaline earth metal, an ammonium group or an ammonium group substituted by an organic group.

In the present invention, the ratio of the copolymer (B) in the cement admixture to the fresh cement composition in terms of the solid content of cement admixture is preferably from 0.1 to 20 mass%, more preferably from 0.5 to 10 mass%. If the content ratio is less than 0.1 mass%, a fresh cement composition may not be imparted with a sufficiently high viscosity and readily undergo the material separation, whereas if it exceeds 20 mass%, a fresh cement composition may not be imparted with satisfactory fluidity and good fluidity retentive property.

Examples of the N-vinylcarboxylic acid amide-type monomer (a) represented by the formula (1) used as component (B) (that is ($B_1$) and ($B_2$)) in the cement admixture of the present invention include N-vinylformamide, N-vinylacetamide, N-methyl-N-vinylformamide and N-methyl-N-vinylacetamide. Among these, N-vinylacetamide is preferred.

The copolymerization compositional ratio of the N-vinylcarboxylic acid amide-type monomer (a) represented by formula (1) to the copolymer (B) is from 30 to 90%, preferably from 40 to 80%, and more preferably from 50 to 70%. If this ratio exceeds 90%, a fresh cement composition cannot be imparted with satisfactory fluidity and good fluidity retentive property, whereas if it is less than 30%, a fresh cement composition may not be imparted with a sufficiently high viscosity and readily undergo the material separation.

Examples of the unsaturated carboxylic acid-type monomer represented by formula (2) include (meth)acrylic acid, crotonic acid, isocrotonic acid, maleic acid, fumaric acid, itaconic acid and salts thereof. The term "(meth)acryl" as used herein means both "acryl" and "methacryl."

Examples of the salt of unsaturated carboxylic acid include an alkali metal salt such as sodium and potassium, an alkaline earth metal salt such as calcium and magnesium, an ammonium salt, and an ammonium salt substituted by an organic group, such as methylamine, ethylamine, dimethylamine, diethylamine and triethylamine. Among these, preferred are an alkali metal salt, an ammonium salt and an ammonium salt substituted by an organic group.

In the present invention, examples of the unsaturated sulfonic acid-type monomer represented by formula (3) used as the other component of the anionic unsaturated monomer in the copolymer component (B) include 2-(meth)acrylamido-2-methylpropanesulfonic acid, 2-(meth)acrylamidoethanesulfonic acid, (meth)acrylic acid methanesulfonic acid, 2-(meth)acrylic acid ethanesulfonic acid, 3-(meth)acrylic acid propanesulfonic acid and salts thereof. Among these, (meth)acrylates and 2-acrylamido-2-methylpropane sulfonates are preferred. Examples of the salt include an

alkali metal salt such as sodium and potassium, an alkaline earth metal salt such as calcium and magnesium, an ammonium salt, and an ammonium salt substituted by an organic group, such as methylamine, ethylamine, dimethylamine, diethylamine and triethylamine. Among these, an alkali metal salt, an ammonium salt and an ammonium salt substituted by an organic group are preferred.

The copolymerization compositional ratio of the anionic unsaturated monomer (b) to the copolymer (B) used in the present invention is from 10 to 70%, preferably 20 to 50%. If this ratio exceeds 50%, a fresh cement composition is liable to undergo the material separation, whereas if it is less than 10%, a fresh cement composition may not be imparted with satisfactory fluidity and good fluidity retentive property.

It is preferred that the copolymer (B) used in the cement composition of the present invention contain the nonionic unsaturated monomer component (c) represented by the formula (3) above.

The nonionic unsaturated monomer (c) used herein is a monomer copolymerizable with the monomer (a) and the monomer (b). Examples thereof include alkyl (meth)acrylates such as methyl (meth)acrylate, ethyl (meth)acrylate and propyl (meth)acrylate, hydroxyalkyl (meth)acrylates such as 2-hydroxyethyl (meth)acrylate and 2-hydroxypropyl (meth)acrylate, (meth)acrylamide, N,N-dimethylacrylamide, N-isopropylacrylamide, diacetone acrylamide, N-methylolacrylamide, acryloyl morpholine, N-vinylpyrrolidone, (meth)acrylonitrile, styrene, α-methylstyrene, p-methylstyrene, styrene dimer, vinyl acetate, methyl vinyl ketone, ethyl vinyl ketone, methyl vinyl ether, ethyl vinyl ether, isobutylene, 4-methylpentene-1, norbornene, allyl alcohol and allyl chloride. Among these, alkyl (meth)acrylates, hydroxyalkyl (meth)acrylates, (meth)acrylonitrile and vinyl acetate are preferred.

The copolymerization compositional ratio of the nonionic unsaturated monomer (c) to the copolymer (B) is from 0 to 40%, preferably from 5 to 35% and more preferably from 5 to 20%. If this ratio exceeds 40%, a fresh cement composition may not be imparted with satisfactory fluidity retentive property.

The method for manufacturing the copolymer (B) (($B_1$) and ($B_2$)) for use in the present invention is not particularly limited and a method such as solution polymerization, reverse-phase suspension polymerization or precipitation polymerization may be used. The copolymer (B) is usually obtained using a polymerization initiator. For the polymerization initiator, an ordinary radical polymerization initiator may be used and examples thereof include azo-type initiators such as 2,2'-azobisisobutyronitrile, 2,2'-azobis(2-amidinopropane) dihydrochloride, 2,2-azobis[2-(2-imidazolin-2-yl)propane] dihydrochloride, 2,2'-azobis[2-(3,4,5,6-tetrahydropyrimidin-2-yl)propane] dihydrochloride and 2,2'-azobis[2-(5-hydroxy-3,4,5,6-tetrahydropyrimidin-2-yl)propane] dihydrochloride, peroxides such as hydrogen peroxide, benzoyl peroxide, t-butyl hydroperoxide and succinic acid peroxide, and persulfates such as ammonium persulfate and potassium persulfate. A so-called redox-type initiator in which a peroxide or persulfate and a reducing agent such as triethanolamine, sodium sulfite or sodium thiosulfate are allowed to be present in the same system may also be used. For controlling the molecular weight, a chain-transfer agent may also be used at the time of polymerization. Examples of the chain-transfer agent include n-butyl mercaptan, triethylamine, isopropyl alcohol, ammonium thioglycolate and sodium hypophosphite.

The weight average molecular weight (measured by GPC with the pullurane standard) of the copolymer (B) varies depending on the blending conditions, the use conditions and the properties required for the cement composition. However, usually, it is preferably from 100,000 to 5,000,000. If the weight average molecular weight is less than 100,000, a fresh cement composition may not be imparted with a sufficiently high viscosity and readily undergo the material separation, whereas if it exceeds 5,000,000, a fresh cement composition is liable to decrease in the dispersibility and suffer from unsatisfactory performance in the fluidity, fluidity retentive property and filling property.

The method for preparing the cement admixture of the present invention is not particularly limited. The cement admixture may be prepared by producing respective aqueous solutions of the compound (A) and the copolymer (B) and then mixing the solutions at an appropriate ratio by a stirrer. In another method, the compound (A) and the copolymer (B) may be separately added to a cement slurry at the time of preparing the cement composition slurry. Furthermore, it is selectable whether to add the component (A) later if preferring the fluidity of fresh cement, or to add copolymer (B) later if preferring the material separation resistance. In still another method, these may also be separately added and then mixed at the time of kneading a cement composition slurry.

The cement admixture of the present invention is preferably added in an amount of from 0.1 to 5.0% as the solid content based on the fresh cement composition (i.e., cement and the hydraulic material).

The cement admixture of the present invention is used for a hydraulic composition of cements such as concrete for construction or building, concrete secondary product and ceramic building material. The use thereof is not particularly limited.

The cement admixture of the present invention may be used in combination with other cement additives (materials) such as water reducing agent, AE (Air Entrained) water reducing agent, high performance water reducing agent, fluidizer, high performance AE water reducing agent, retarding agent, quick strength enhancer, accelerator, foaming agent, blowing agent, water-holding agent, thickener, waterproofing agent, defoaming agent, watersoluble polymer, surfactant, inflating agent (material), blast furnace slag, fly ash, silica fume, asbestos, vinylon fiber and PP fiber.

BEST MODE FOR CARRYING OUT THE INVENTION

The present invention is described in greater detail in below by referring to the Examples, Comparative Examples and Test Examples. However, the present invention is by no means limited to these Examples. Unless otherwise indicated specifically, % means mass%.

Production Example 1: Production of Copolymer

Into a glass-made reactor equipped with a stirrer, 200 g of an aqueous 20% sodium methacrylate (MAA-Na) solution was charged. Thereto, 740 g of water was added and then 60 g of N-vinylacetamide (NVA) and 0.01 g of ammonium thioglycolate were dissolved. Subsequently, in a constant temperature bath kept at 50°C, the dissolved oxygen was removed by passing nitrogen while stirring the solution and thereto, 0.45 g of 2,2'-azobis(2-amidinopropane) dihydrochloride (AAD) was added and reacted in the nitrogen stream to obtain an aqueous solution of Copolymer (B1). The weight average molecular weight of the copolymer obtained was 2,560,000.

Production Examples 2 to 9: Production of Copolymers

Aqueous solutions of Copolymer (B2) to (B9) were obtained in the same manner as in Production Example 1 except for changing the monomer composition and addition amount thereof. The weight average molecular weights thereof are shown in Table 1 below together with (B1).

[Table 1]

| Name of Copolymer | Weight of Monomer Charged (g) | | | | | | | AAD (g) | Weight Average Molecular Weight ($^*10^4$) |
|---|---|---|---|---|---|---|---|---|---|
| | Monomer A | | Monomer B | | | Monomer C | | | |
| | NVA | NVF | 20 wt% MAA-Na | 20 wt% AA-Na | 20 wt% AMPS-Na | MA | AN | | |
| B1 | 60 | | 200 | | | | | 0.45 | 256 |
| B2 | 70 | | | 150 | | | | 0.60 | 243 |
| B3 | 50 | | | | 250 | | | 0.60 | 248 |
| B4 | 50 | | 100 | | 150 | | | 0.50 | 269 |
| B5 | 50 | | 200 | | | 10 | | 0.35 | 223 |
| B6 | 50 | | 200 | | | | 10 | 0.40 | 231 |
| B7 | 50 | | | | 200 | 10 | | 0.50 | 240 |
| B8 | 50 | | | | 200 | | 10 | 0.40 | 253 |
| B9 | | 50 | 200 | | | 10 | | 0.35 | 234 |

NVA: N-vinylacetamide, NVF: N-vinylformamide, MAA-Na: Sodium methacrylate, AA-Na: sodium acrylate, AMPS-Na: sodium 2-acrylamido-2-methylpropanesulfonate, MA: methyl acrylate, AN: acrylonitrile, AAD: 2,2'-azobis(2-amidinopropane) dihydrochloride

Production Example 10: Preparation of cement admixture

Using MOLMASTER L-10 (trade name, produced by Showa Denko K.K.) as the sodium salt of melaminesulfonic acid formaldehyde condensate (MSF), Cement Admixture (S1) of the present invention was obtained by adding 9.6 g of the aqueous solution of Copolymer (B1) prepared in Production Example 1 to 100 g of the MOLMASTER L-10 such that the ratio of the solid content of the copolymer (B) to the solid content of the cement admixture was 3.0%, and then stirring and mixing the blend.

Production Examples 11 to 18: Preparation of cement admixture

Cement Admixtures (S2) to (S9) of the present invention were obtained in the same manner as in Production

Example 10 except for using aqueous solutions of Copolymers (B2) to (B9), respectively, in place of the aqueous solution of Copolymer (B1) such that the ratio of the solid content of the copolymer (B) to the solid content of the cement admixture was 3.0%.

Production Examples 19 to 27: Preparation of cement admixture

Cement Admixtures (S10) to (S18) of the present invention were obtained in the same manner as in Production Examples 10 to 18 except for using MIGHTY 150 (trade name, produced by Kao Corp.) as the sodium salt of naphthalenesulfonic acid formaldehyde condensate (NSF) in place of the sodium salt of melaminesulfonic acid formaldehyde condensate such that the ratio of the solid content of the copolymer (B) to the solid content of the cement admixture was 3.0%.

Comparative Production Examples 1 to 3: Preparation of comparative cement admixture

Cement Admixtures (R1) to (R3) were obtained in the same manner as in Production Examples 10 to 12 except for using POZOLIS No. 72 (trade name, produced by NMB K.K.) which is a lignin sulfonic acid salt (LS), in place of the sodium salt of melaminesulfonic acid formaldehyde condensate such that the ratio of the solid content of the copolymer (B) to the solid content of the cement admixture was 3.0%.
These cement admixtures are shown in Table 2 together with (S1) to (S18).

[Table 2]

| Name of Sample | Kind and Content of Compound A | Content of Aqueous Solution of | Content Ratio*of Copolymer B |
|---|---|---|---|
| Copolymer B S1 | MSF: 100 g | B1: 9.6 g | 3.0% |
| S2 | MSF: 100 g | B2: 9.6 g | 3.0% |
| S3 | MSF: 100 g | B3: 9.6 g | 3.0% |
| S4 | MSF: 100 g | B4: 9.6 g | 3.0% |
| S5 | MSF: 100 g | B5: 9.6 g | 3.0% |
| S6 | MSF: 100 g | B6: 9.6 g | 3.0% |
| S7 | MSF: 100 g | B7: 9.6 g | 3.0% |
| S8 | MSF: 100 g | B8: 9.6 g | 3.0% |
| S9 | MSF: 100 g | B9: 9.6 g | 3.0% |
| S10 | NSF: 100 g | B1: 13.1 g | 3.0% |
| S11 | NSF: 100 g | B2: 13.1 g | 3.0% |
| S12 | NSF: 100 g | B3: 13.1 g | 3.0% |
| S13 | NSF: 100 g | B4: 13.1 g | 3.0% |
| S14 | NSF: 100 g | B5: 13.1 g | 3.0% |
| S15 | NSF: 100 g | B6: 13.1 g | 3.0% |
| S16 | NSF: 100 g | B7: 13.1 g | 3.0% |
| S17 | NSF: 100 g | B8: 13.1 g | 3.0% |
| S18 | NSF: 100 g | B9: 13.1 g | 3.0% |
| R1 | LS: 100 g | B1: 15.8 g | 3.0% |
| R2 | LS: 100 g | B2: 15.8 g | 3.0% |
| R3 | LS: 100 g | B3: 15.8 g | 3.0% |

* Content ratio of Copolymer B
= (mass of solid content of Copolymer B/mass of solid content of mixed solution) x 100 (%)
MSF: sodium salt of melaminesulfonic acid formaldehyde condensate (MOLMASTER L-10, trade name, produced by Showa Denko K.K.) NSF: sodium salt of naphthalenesulfonic acid formaldehyde condensate (MIGHTY 150, trade name, produced by Kao Corp.) LS: lignin sulfonic acid salt (POZOLIS No. 72, trade name, produced by NMB K.K.)

Test Example

(1) Evaluation 1 of Performance of Cement Admixtures

In order to examine the performance of Cement Admixtures (S1) to (S18) obtained in Production Examples 10 to 27, each cement admixture was added at the preparation of a concrete and tests for evaluating the performance with respect to the fluidity, fluidity retentive property, self-filling property, material separation resistance and strength of the hardened form, were conducted.

Also, the cement admixture compositions obtained in Comparative Production Examples and the commercially available cement admixtures (R4), (R5), (R6) and (R7) on their individual sole use were tested in the same manner for evaluating the performance. The results are additionally shown as Comparative Examples.

R4: sodium salt of melaminesulfonic acid formaldehyde condensate (MOLMASTER L-10, trade name, produced by Showa Denko K.K.)
R5: sodium salt of naphthalenesulfonic acid formaldehyde condensate (MIGHTY-150, trade name, produced by Kao Corp.)
R6: lignin sulfonic acid salt (SUNFLOW KS, trade name, produced by San Flow K.K.)
R7: polycarboxylic acid (PARIK FP-100S, trade name, produced by Fujisawa Yakuhin K.K.)

(1-1) Blending of Concrete and Method for Kneading

(i) Blending of Concrete

The materials blended in the concrete for the performance evaluation tests are shown in Table 3. Here, an AE agent VINSOL (trade name, produced by Sanso Kagaku K.K.) was used to have a target air content of 4.5%. Furthermore, the amount of the cement admixture added was adjusted by setting the target flow value to 60 cm ± 3 cm.

[Table 3]

| | | Unit Amount (kg/m$^3$) | | | |
|---|---|---|---|---|---|
| W/C (%) | S/a[5] (%) | W[1] | C[2] | S[3] | G[4] |
| 50.0 | 52.3 | 175 | 350 | 920 | 846 |

1) Water (W): tap water
2) Cement (C): ordinary Portland cement (specific gravity: 3.16)
3) Small aggregate (S): river sand from Sagami river (specific gravity: 2.63, fineness modulus: 2.71)
4) Giant aggregate (G): crushed stone from Ohme (specific gravity: 2.65, fineness modulus: 6.85)
5) a=S+G

(ii) Method for Kneading

The cement, small aggregate and giant aggregate each in a predetermined amount were charged into a 50 L-volume forced twin screw mixer and stirred for 30 seconds. Thereafter, a mixed solution of water, AE agent and cement admixture was added thereto and the resulting blend was stirred for 90 seconds, discharged and subjected to the performance tests.

(1-2) Method for Carrying Out Performance Tests

(i) Fluidity Test

Slump flow test:

This was carried out in accordance with JASS (Nippon Kenchiku Gakkai (Japan Architecture Society Standard)) 5 T-503 and measured immediately after the kneading, after 30 minutes, after 60 minutes and after 90 minutes.

(ii) Self-Filling Property Test

Using an L-type tester shown in Fig. 1 (perspective view) and Fig. 2 (side view) in the state where the partition

plate 1 was closed, the concrete was filled in the left room 2 with respect to the partition plate 1, the partition plate 1 was then fully opened, and the filling height of the concrete run into the right room 3 ramified with 13 mm-ϕ reinforcements 4 (vertically three and horizontally seven at intervals of 50 mm) was measured. The height of $H_1$ was 400 mm, $H_2$ was 200 mm, $L_2$ was 400 mm and the width M was 200 mm. The larger filling height (closer to 200 mm) reveals that better self-filling property can be ensured.

(iii) Material Separation Resistance Test

The Coarse Aggregate Wash Test described in Nippon Kenchiku Gakkai, Ko-Ryudo Concrete no Zairyo, Chogo. Seizo. Seko Shishin (An). Do Kaisetsu (Material. Mixing. Production, Application Guide (Plan) and Explanation Thereof for High Fluidity Concrete) was carried out.

More specifically, about 2 kg of a fresh concrete after the slump flow test was sampled from both the central part and the peripheral part and wet screened through a 5-mm sieve. The weight of aggregates remained was measured and the ratio of the weight of giant aggregates from the central part to the weight of the giant aggregates from the peripheral part was obtained as the internal/external coarse aggregate ratio. The internal/external coarse aggregate ratio closer to 1 reveals that the difference of coarse aggregates is small between the central part and the peripheral part and the material separation resistance is better.

(iv) Others

The air content and the compressive strength (age: after 1 day, after 7 days, after 28 days) were tested in accordance with JIS-A1128 and JIS-A1108.

(1-3) Performance Test Results

The performance test results are shown in Table 4.

[Table 4]

| Section | No. | Cement Admixture | | Air Content (%) | Slump Flow (cm) | | | | Self-Filling Property (filling height) (cm) | Separation Resistance (internal/external coarse aggregate ratio) | Compressive Strength (N/mm²) | | |
|---|---|---|---|---|---|---|---|---|---|---|---|---|---|
| | | Name | Amount Added (wt%) | | Immediately After | After 30 min. | After 60 min. | After 90 min. | | | 1 Day Age | 7 Days Age | 28 Days Age |
| Example | 1 | S1 | 1.36 | 4.7 | 60.0 | 60.5 | 60.0 | 59.0 | 15.5 | 1.06 | 11.9 | 32.4 | 45.5 |
| | 2 | S2 | 1.42 | 4.5 | 58.5 | 58.5 | 58.0 | 57.5 | 14.0 | 1.04 | 11.5 | 32.0 | 42.7 |
| | 3 | S3 | 1.30 | 4.5 | 60.5 | 60.0 | 60.0 | 59.0 | 15.5 | 1.08 | 11.8 | 33.2 | 44.8 |
| | 4 | S4 | 1.30 | 4.6 | 60.0 | 59.5 | 59.0 | 58.5 | 15.0 | 1.08 | 12.2 | 33.7 | 45.7 |
| | 5 | S5 | 1.36 | 4.5 | 59.5 | 60.0 | 59.0 | 58.0 | 15.5 | 1.09 | 12.1 | 33.0 | 44.9 |
| | 6 | S6 | 1.36 | 4.3 | 62.0 | 60.5 | 60.5 | 60.0 | 16.5 | 1.07 | 11.7 | 32.6 | 45.0 |
| | 7 | S7 | 1.36 | 4.5 | 61.5 | 61.5 | 60.0 | 60.0 | 16.0 | 1.08 | 11.5 | 33.1 | 44.1 |
| | 8 | S8 | 1.30 | 4.4 | 62.0 | 60.5 | 59.5 | 59.5 | 16.0 | 1.06 | 11.4 | 32.6 | 43.2 |
| | 9 | S9 | 1.42 | 4.4 | 60.0 | 60.0 | 59.0 | 58.5 | 15.0 | 1.04 | 12.0 | 33.3 | 44.4 |
| | 10 | S10 | 1.30 | 4.2 | 61.5 | 60.5 | 60.5 | 59.5 | 15.5 | 1.05 | 11.6 | 32.7 | 43.7 |
| | 11 | S11 | 1.36 | 4.5 | 58.5 | 59.0 | 58.5 | 57.5 | 14.5 | 1.03 | 11.7 | 32.7 | 43.5 |
| | 12 | S12 | 1.24 | 4.4 | 59.5 | 60.5 | 59.5 | 58.5 | 15.0 | 1.06 | 11.9 | 33.2 | 44.6 |
| | 13 | S13 | 1.24 | 4.6 | 60.5 | 60.5 | 59.5 | 59.0 | 15.0 | 1.05 | 11.8 | 33.0 | 44.5 |
| | 14 | S14 | 1.24 | 4.7 | 60.0 | 59.5 | 59.0 | 59.0 | 15.5 | 1.06 | 12.2 | 33.9 | 44.9 |
| | 15 | S15 | 1.24 | 4.5 | 61.0 | 60.0 | 59.5 | 59.0 | 15.5 | 1.06 | 12.4 | 34.1 | 45.4 |
| | 16 | S16 | 1.24 | 4.6 | 60.5 | 61.5 | 60.0 | 60.0 | 15.0 | 1.04 | 12.6 | 33.7 | 45.4 |
| | 17 | S17 | 1.24 | 4.6 | 59.5 | 58.5 | 58.5 | 58.0 | 15.0 | 1.05 | 11.5 | 32.9 | 42.9 |
| | 18 | S18 | 1.36 | 4.4 | 59.0 | 58.5 | 58.0 | 57.5 | 14.5 | 1.04 | 11.8 | 33.6 | 44.3 |
| Comparative Example | 19 | R1 | 3.00 | 4.7 | 42.0 | 33.5 | 28.0 | 25.5 | 2.5 | 1.03 | 8.0 | 25.2 | 38.3 |
| | 20 | R2 | 3.00 | 4.8 | 40.5 | 32.0 | 27.0 | 23.5 | 2.0 | 1.04 | 8.1 | 26.4 | 38.8 |
| | 21 | R3 | 3.00 | 4.7 | 42.0 | 32.5 | 27.5 | 23.0 | 2.5 | 1.04 | 7.8 | 25.5 | 37.9 |
| | 22 | R4 | 1.30 | 4.5 | 62.0 | 45.5 | 40.0 | 34.0 | 9.5 | 1.25 | 10.9 | 31.2 | 41.3 |
| | 23 | R5 | 1.24 | 4.6 | 61.5 | 42.0 | 38.0 | 32.0 | 8.0 | 1.22 | 10.3 | 30.4 | 40.8 |
| | 24 | R6 | 3.00 | 4.7 | 43.0 | 34.5 | 29.5 | 27.0 | 3.0 | 1.03 | 8.0 | 25.4 | 37.6 |
| | 25 | R7 | 0.60 | 4.3 | 60.5 | 61.5 | 59.5 | 58.0 | 10.5 | 1.31 | 8.3 | 29.5 | 39.5 |

* The amount of cement admixture added: mass% of polymer solid content based on cement

(2) Evaluation 2 of Performance of Cement Admixtures

In order to further examine the performance as the cement admixture of (S1) to (S18) and (R1) to (R7), each cement admixture was added at the preparation of a concrete and tests for evaluating the performance with respect to the fluidity, fluidity retentive property and strength of the hardened form were carried out.

(2-1) Blending of Concrete and Method for Kneading

(i) Blending of Concrete

The materials blended in the concrete for the performance evaluation tests are shown in Table 5. Here, an AE agent VINSOL (trade name, produced by Sanso Kagaku K.K.) was used to have a target air content of 4.5%.

[Table 5]

| | | Unit Amount (kg/m$^3$) | | | |
|---|---|---|---|---|---|
| W/C (%) | S/a[5] (%) | W[1] | C[2] | S[3] | G[4] |
| 51.5 | 43.0 | 170 | 330 | 770 | 1,029 |

1) Water (W): tap water
2) Cement (C): ordinary Portland cement (specific gravity: 3.16)
3) Small aggregate (S): river sand from Sagami river (specific gravity: 2.63, fineness modulus: 2.71)
4) Giant aggregate (G): crushed stone from Ohme (specific gravity: 2.65, fineness modulus: 6.85)
5) a=S+G

ii) Method for Kneading

The method was the same as in "Evaluation 1 of Performance of Cement Admixture" above.

(2-2) Method for Carrying Out Performance Tests

Slump flow test:

This was carried out in accordance JIS-A1101 and measured immediately after the kneading, after 30 minutes and after 60 minutes.

The air content and the compressive strength (after 1 day, after 7 days, after 28 days) were tested in the same manner as in "Evaluation 1 of Performance of Cement Admixture" above.

(2-3) Performance Test Results

The performance test results are shown in Table 6.

[Table 6]

| Section | No. | Cement Admixture | | Air Content (%) | Slump Flow (cm) | | | Compressive Strength ($N/mm^2$) | | |
|---|---|---|---|---|---|---|---|---|---|---|
| | | Name | Amount Added (wt%) | | Immediately After | After 30 min. | After 60 min. | 1 Day Age | 7 Days Age | 28 Days Age |
| Example | 1 | S1 | 0.75 | 4.3 | 20.3 | 19.6 | 18.9 | 7.2 | 19.5 | 33.4 |
| | 2 | S2 | 0.75 | 4.4 | 19.8 | 19.1 | 18.6 | 6.3 | 18.9 | 32.4 |
| | 3 | S3 | 0.75 | 4.6 | 20.9 | 19.9 | 19.1 | 6.4 | 17.3 | 32.4 |
| | 4 | S4 | 0.75 | 4.5 | 20.8 | 19.7 | 18.8 | 7.4 | 19.9 | 33.5 |
| | 5 | S5 | 0.75 | 4.5 | 20.6 | 19.8 | 19.0 | 6.2 | 18.8 | 32.4 |
| | 6 | S6 | 0.75 | 4.4 | 20.7 | 19.5 | 18.7 | 6.8 | 18.4 | 32.4 |
| | 7 | S7 | 0.75 | 4.4 | 20.4 | 19.4 | 18.5 | 7.0 | 19.0 | 32.8 |
| | 8 | S8 | 0.75 | 4.5 | 20.6 | 19.7 | 19.0 | 6.5 | 17.3 | 32.3 |
| | 9 | S9 | 0.75 | 4.5 | 19.7 | 19.0 | 18.0 | 7.1 | 19.2 | 32.8 |
| | 10 | S10 | 0.75 | 4.6 | 20.9 | 19.6 | 18.7 | 6.9 | 18.4 | 32.4 |
| | 11 | S11 | 0.75 | 4.3 | 20.4 | 19.4 | 18.6 | 6.7 | 17.7 | 32.5 |
| | 12 | S12 | 0.75 | 4.5 | 21.4 | 20.2 | 19.3 | 6.8 | 18.8 | 32.9 |
| | 13 | S13 | 0.75 | 4.4 | 21.1 | 20.2 | 19.2 | 6.9 | 18.4 | 32.5 |
| | 14 | S14 | 0.75 | 4.4 | 21.2 | 19.9 | 19.0 | 7.2 | 19.0 | 33.0 |
| | 15 | S15 | 0.75 | 4.7 | 21.0 | 19.7 | 18.8 | 6.1 | 17.3 | 32.2 |
| | 16 | S16 | 0.75 | 4.5 | 20.5 | 19.2 | 18.4 | 6.6 | 19.2 | 33.1 |
| | 17 | S17 | 0.75 | 4.6 | 21.1 | 19.8 | 19.0 | 6.6 | 18.4 | 32.8 |
| | 18 | S18 | 0.75 | 4.5 | 20.2 | 18.9 | 18.4 | 6.4 | 17.7 | 32.3 |
| Comparative Example | 19 | R1 | 1.60 | 4.6 | 20.2 | 10.7 | 7.5 | 5.5 | 15.0 | 27.7 |
| | 20 | R2 | 1.60 | 4.7 | 20.0 | 10.7 | 7.7 | 5.3 | 15.2 | 28.0 |
| | 21 | R3 | 1.60 | 4.6 | 19.6 | 10.2 | 7.2 | 5.3 | 15.3 | 27.8 |
| | 22 | R4 | 0.75 | 4.5 | 21.6 | 13.0 | 9.5 | 5.6 | 15.5 | 28.7 |
| | 23 | R5 | 0.75 | 4.6 | 21.7 | 12.7 | 8.8 | 5.5 | 15.2 | 27.9 |
| | 24 | R6 | 1.60 | 4.6 | 20.4 | 11.0 | 8.2 | 5.4 | 15.5 | 28.3 |
| | 25 | R7 | 0.35 | 4.3 | 21.1 | 20.0 | 18.6 | 4.9 | 14.2 | 26.6 |

* The amount of cement admixture added: mass% of polymer solid content based on cement

INDUSTRIAL APPLICABILITY

The cement admixture of the present invention can impart, when added to a cement composition such as concrete, excellent capabilities in good balance to a cement composition, such as fluidity, fluidity retentive property, filling property and material separation resistance, therefore,the cement admixture of the present invention is effective in the improvement of applicability, workability, and the quality of hardened form.

## Claims

1. A cement admixture comprising (A) one or more compound selected from a condensate of formaldehyde with one or more compound of melaminesulfonic acid, naphthalenesulfonic acid, benzenesulfonic acid, toluenesulfonic acid, methylnaphthalenesulfonic acid and salts thereof and ($B_1$) a copolymer obtained by copolymerizing a monomer mixture comprising

   (a) from 30 to 90 mass% of one or more N-vinylcarboxylic acid amide-type monomer represented by the following formula (1)

   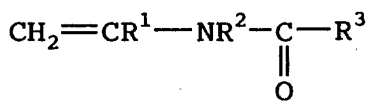

   ... (1)

   wherein $R^1$, $R^2$ and $R^3$ each independently represent hydrogen atom or a methyl group and
   (b) from 10 to 70 mass% of one or more anionic unsaturated monomer selected from an unsaturated carboxylic acid-type monomer represented by the following formula (2)

   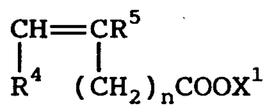

   ... (2)

   wherein $R^4$ represents hydrogen atom, a methyl group or $-COOX^2$, $R^5$ represents hydrogen atom, a methyl group or $-COOX^3$, $X^1$, $X^2$ and $X^3$ each independently represent hydrogen atom, an alkali metal, an alkaline earth metal, an ammonium group or an ammonium group substituted by an organic group, and n represents 0 or 1, provided that when n represents 0, $R^5$ does not represent $-COOX^3$ and
   an unsaturated sulfonic acid-type monomer represented by the following formula (3)

   $$CH_2{=}CR^6{-}X^4{-}R^7{-}SO_3{-}X^5 \quad \cdots (3)$$

   wherein $R^6$ represents hydrogen atom or a methyl group, $R^7$ represents a linear alkylene group having from 1 to 4 carbon atoms or a branched alkylene group, $X^4$ represents -CONH- or -COO-, and $X^5$ represents hydrogen atom, an alkali metal, an alkaline earth metal, an ammonium group or an ammonium group substituted by an organic group,
   provided that the total of (a) and (b) is 100 mass%.

2. A cement admixture comprising (A) one or more compound selected from a melaminesulfonic acid formaldehyde condensate, a naphthalenesulfonic acid formaldehyde condensate and salts thereof and ($B_2$) a copolymer obtained by copolymerizing a monomer mixture comprising

   (a) from 30 to 90 mass% of one or more N-vinylcarboxylic acid amide-type monomer represented by the following formula (1)

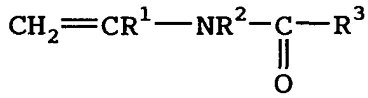 ... (1)

wherein the symbols have the same meanings as in claim 1,
(b) from 10 to 70 mass% of one or more anionic unsaturated monomer selected from an unsaturated carboxylic acid-type monomer represented by the following formula (2)

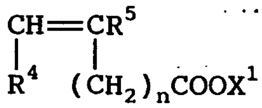 ... (2)

wherein the symbols have the same meanings as in claim 1 and
an unsaturated sulfonic acid-type monomer represented by the following formula (3)

$$CH_2{=}CR^6{-}X^4{-}R^7{-}SO_3{-}X^5 \quad \cdots (3)$$

wherein the symbols have the same meanings as in claim 1 and
(c) from 0 to 40 mass% of one or more nonionic unsaturated monomer,
provided that the total of (a), (b) and (c) is 100 mass%.

**3.** The cement admixture as claimed in claim 1 or 2, wherein the content ratio of the copolymer ($B_1$) or ($B_2$) in the solid content of the cement admixture is from 0.1 to 20 mass%.

**4.** The cement admixture as claimed in claim 1 or 2, wherein the N-vinylcarboxylic acid amide-type monomer (a) is N-vinylacetamide.

**5.** The cement admixture as claimed in claim 1 or 2, wherein the anionic unsaturated monomer (b) is one or more monomer selected from acrylic acid, methacrylic acid, maleic acid, 2-acrylamido-2-methylpropanesulfonic acid and salts thereof.

**6.** The cement admixture as claimed in claim 2, wherein the nonionic unsaturated monomer (c) is one or more monomer selected from alkyl acrylates, alkyl methacrylates, hydroxyalkyl acrylates, hydroxyalkyl methacrylates, acrylonitrile, methacrylonitrile and vinyl acetate.

**7.** The cement admixture as claimed in claim 2 or 6, wherein the ratio of the nonionic unsaturated monomer (c) in the copolymer ($B_2$) is from 5 to 30 mass%.

**8.** A method for preparing a cement composition, comprising adding a cement admixture described in any one of claims 1 to 7 to a cement composition slurry.

**9.** The method for preparing a cement composition as claimed in claim 8, wherein the compound (A) and the copolymer ($B_1$) or ($B_2$) are separately added.

**10.** The method for preparing a cement composition as claimed in claim 8 or 9, wherein the addition amount of the cement admixture is from 0.1 to 5.0 mass% in terms of the solid content based on the cement composition.

**11.** A cement composition obtainable by the preparation method described in any of claims 8 to 10.

**12.** A cement composition having blended therein a cement admixture described in any one of claims 1 to 7.

**13.** A hardened product of concrete or mortar using a cement composition described in claim 12.

**14.** A construction using a hardened product described in claim 13.

Fig. 1

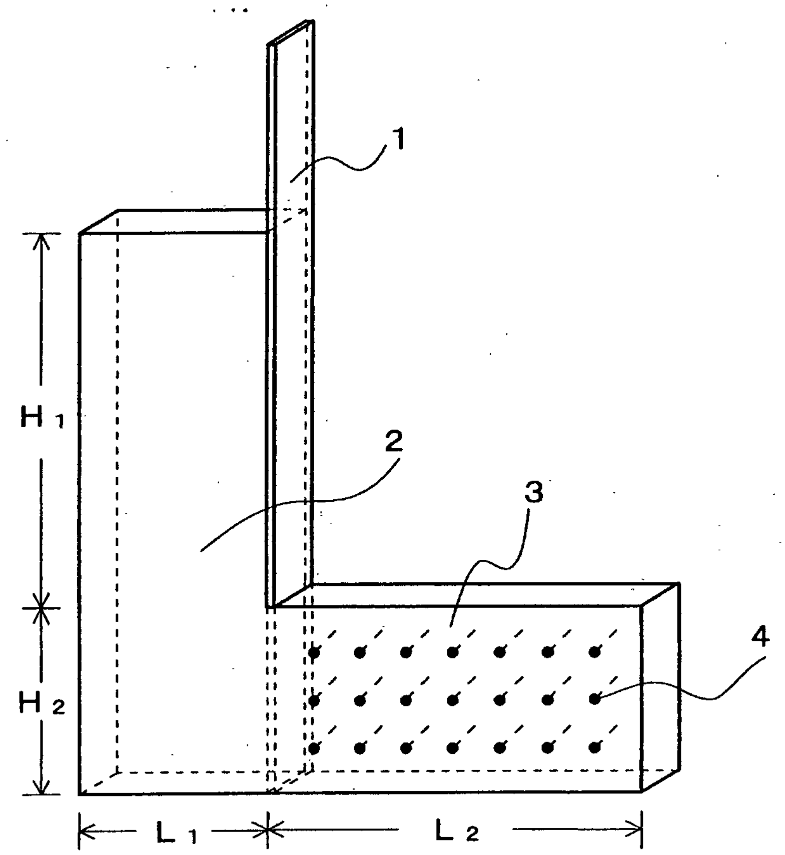


Fig. 2

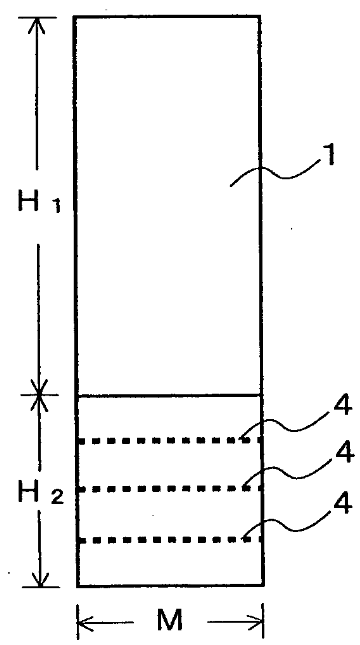

European Patent Office

# EUROPEAN SEARCH REPORT

Application Number
EP 00 12 7803

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 757 998 A (SHOWA DENKO KK) 12 February 1997 (1997-02-12) * page 2, line 41 - page 3, line 40 * * page 5, line 2 - line 13 * | 1-14 | C04B24/22 C04B24/26 C08F26/02 |
| X | EP 0 444 489 A (BASF CORP) 4 September 1991 (1991-09-04) * page 2, line 5 - line 15 * * page 4, line 18 - line 30 * * page 4, line 43 - page 5, line 10 * | 1-14 | |
| A | TAMAOKI ET AL.: "Cement additives for ultrahigh-pressure jet injection " CHEMICAL ABSTRACTS + INDEXES,US,AMERICAN CHEMICAL SOCIETY. COLUMBUS, vol. 118, no. 26, 28 June 1993 (1993-06-28), page 353 XP000408311 ISSN: 0009-2258 * abstract * | 1-14 | |
| | | | TECHNICAL FIELDS SEARCHED (Int.Cl.7) |
| A | US 5 379 841 A (PUSCH GUENTER ET AL) 10 January 1995 (1995-01-10) * claims 1,4-6 * | 1,2,8, 11-14 | C04B C08F |
| A | US 4 309 523 A (ENGELHARDT FRIEDRICH ET AL) 5 January 1982 (1982-01-05) * claims 1-4 * | 1,2,8, 11-14 | |

The present search report has been drawn up for all claims

| Place of search | Date of completion of the search | Examiner |
|---|---|---|
| MUNICH | 4 April 2001 | Mini, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 00 12 7803

This annex lists the patent family membersrelating to the patent documents cited in the above-mentioned European search report.
The members are as contained in the European Patent Office EDP file on
The European Patent Office is in no way liable for these particulars which are merely given for the purpose of information.

04-04-2001

| Patent document cited in search report | Publication date | Patent family member(s) | Publication date |
|---|---|---|---|
| EP 0757998 A | 12-02-1997 | JP 9052749 A | 25-02-1997 |
| | | CA 2182820 A | 09-02-1997 |
| | | US 6090899 A | 18-07-2000 |
| EP 0444489 A | 04-09-1991 | US 5092935 A | 03-03-1992 |
| | | NO 910739 A | 27-08-1991 |
| US 5379841 A | 10-01-1995 | BR 9301516 A | 30-11-1993 |
| | | DE 59308707 D | 30-07-1998 |
| | | DK 577931 T | 01-02-1999 |
| | | EP 0577931 A | 12-01-1994 |
| | | MX 9302045 A | 29-07-1994 |
| | | NO 303147 B | 02-06-1998 |
| | | RU 2060358 C | 20-05-1996 |
| US 4309523 A | 05-01-1982 | DE 2931897 A | 26-02-1981 |
| | | AT 2749 T | 15-03-1983 |
| | | AU 530385 B | 14-07-1983 |
| | | AU 6109980 A | 12-02-1981 |
| | | BR 8004900 A | 17-02-1981 |
| | | CA 1171597 A | 24-07-1984 |
| | | DD 153879 A | 10-02-1982 |
| | | DE 3062285 D | 14-04-1983 |
| | | DK 337080 A | 07-02-1981 |
| | | EP 0023712 A | 11-02-1981 |
| | | ES 494003 D | 01-10-1981 |
| | | ES 8107264 A | 16-12-1981 |
| | | JP 1597672 C | 28-01-1991 |
| | | JP 2023566 B | 24-05-1990 |
| | | JP 56024413 A | 09-03-1981 |
| | | MX 155501 A | 18-03-1988 |
| | | NO 802321 A,B, | 09-02-1981 |
| | | SU 995707 A | 07-02-1983 |
| | | SU 1207398 A | 23-01-1986 |
| | | US 4357245 A | 02-11-1982 |
| | | YU 1383 A | 31-12-1983 |
| | | YU 197180 A | 30-04-1983 |
| | | ZA 8004744 A | 29-07-1981 |

EPO FORM P0459

For more details about this annex : see Official Journal of the European Patent Office, No. 12/82